# EUROPEAN PATENT APPLICATION

(11) **EP 1 135 989 A2**
(43) Date of publication of application: **26.09.2001**
(21) Application number: 01610030.7
(22) Date of filing: 22.03.2001
(51) Int. Cl.: A22B 5/00

(54) **Method and tools for mechanical loosening of an organ from the thoracic or abdominal cavity of a carcass**

(30) Priority: 22.03.2000 DK 200000487
(71) Applicant: Slagteriernes Forskningsinstitut, 4000 Roskilde (DK)
(72) Inventor: Hansen, Niels Worsoe, 4320 Lejre (DK); Nielsen, Jens Ulrich, 2880 Bagsvaerd (DK); Andersen, Kjeld Neve, 2670 Greve Strand (DK); Jensen, Niels R., 2900 Hellerup (DK)
(74) Representative: Joergensen, Bjoern Barker

(57) **Abstract**

In the method a tool (6) with an elongate portion is introduced into the open thorax or abdomen of a carcass suspended at the feet and into the thoracic or abdominal cavity to take up a substantially vertical position at the spinal column (7), the lower end of the tool (8) being positioned above a level corresponding to the position of the organ in the animal prior to the slaughtering. The tool (6) is moved substantially vertically downwards until the lower end (8) of the tool reaches a second level, and subsequently at least a part of the elongate portion of the tool is moved away from the spinal column towards the abdominal or thoracic opening, the lower end (8) of the tool being kept substantially in the second level.

## Description

The present invention relates to a method for mechanical loosening of at least one organ from the thoracic or abdominal cavity of a carcass suspended at the hind feet and cut open in the abdomen and the thorax.

The invention further relates to an apparatus and tools for mechanical loosening of at least one organ from the thoracic or abdominal cavity of a carcass, in particular a pig.

When removing the plucks set from a pig carcass, it is sometimes necessary to loosen the lungs from the thoracic cavity, as they may have coalesced, for instance if the animal has suffered from a pulmonal disease. As it is not possible, prior to the processing, to determine if the lungs have coalesced, there is in an automatic removal process a need for a loosening of the plucks set from the thoracic cavity. It may be a question of a traditional undivided plucks set or for instance the so-called heart plucks, which comprises the heart, the lungs and the oesophagus. In a new process, the liver plucks set is first removed from the carcass by cutting the connection to the heart plucks set, which remains in the carcass and is removed in a succeeding process.

It is the object of the invention to provide a method for mechanical loosening of one or more organs from the thoracic or abdominal cavity of a carcass. In the process, it should in particular be possible to loosen the lungs from the thoracic cavity. However, it is not necessary to remove the lungs completely from the surface of the thoracic cavity, as lung remains left can be removed at a later step in the processing of the carcass.

The object is met by means of a method as stated by way of introduction which is characterized in that a tool with at least one elongate portion is introduced into the thoracic or abdominal cavity to take up a substantially vertical position at the spinal column, the lower end of the tool being positioned above a level corresponding to the position of the organ in the animal prior to the slaughtering, that the tool is moved substantially vertically downwards until the lower end of the tool reaches a second level and that subsequently at least a part of the elongate portion of the tool is moved away from the spinal column towards the abdominal or thoracic opening, the lower end of the tool being kept substantially in the second level. During the movement away from the spinal column, the elongate portion is preferably pulled or swung.

In an embodiment the elongate portion is turned about the lower end during the movement away from the spinal column. Hereby is attained that the heart plucks set is pushed out of the thoracic cavity, the lungs being torn loose in places, where they may have coalesced with the thoracic cavity.

In another preferred embodiment the elongate portion is kept substantially in the vertical position during the movement away from the spinal column. In this connection a tool is preferably used which is mounted on a shaft part and is provided with two members pivotally mounted about axes extending in a plane transversely to the shaft part and with means for turning the members, said members being each provided with an elongate edge portion serving as an elongate portion and extending at a distance from the pivot axis of the member, preferably substantially parallel thereto, whereby the tool is introduced in the carcass with the members in a forward position and the elongate edge portions substantially in a vertical position and the members are swung to each respective side before the tool is retracted from the carcass. In this manner the parts of the members comprising the elongate edge pass along the spinal column in the interspaces present on each side of the spinal column between the spinal column and the lungs, following which the elongate edge portions of the members by the swinging of the members scrape against the ribs in the thoracic cavity, thereby loosening the lungs in places, where they might adhere. Subsequently, the members push the heart plucks set partially out of the thoracic cavity. The members thus constitute scrape and push members.

The object is further met by means of an apparatus for mechanical loosening of at least one organ from the thoracic or abdominal cavity of a carcass suspended at the hind feet and cut open in the abdomen and the thorax, said apparatus being characterized in comprising a tool with at least one elongate portion and devices for moving the tool towards the carcass to a first, substantially vertical position of the elongate portion at the spinal column of the carcass, moving the tool substantially vertically downwards until the lower end of the tool reaches a second, lower level, and subsequently moving at least a part of the elongate portion away from the spinal column, the lower end of the tool being retained substantially in the second level.

In an embodiment the device for pulling or swinging the elongate portion away from the spinal column is designed in such a manner that the elongate portion during the movement away from the spinal column is turned about the lower end.

In another embodiment the device for pulling or swinging the elongate portion away from the spinal column is designed in such a manner that the elongate portion during the movement away from the spinal column is kept substantially in the vertical position.

In a preferred further development of the last-mentioned embodiment the tool is mounted on a shaft part and is provided with two members pivotally mounted about axes extending in a plane transversely to the shaft part and with means for turning the members, said members being each provided with an elongate edge portion serving as an elongate portion and extending at a distance from the pivot axis of the member, preferably substantially parallel thereto, that the means for turning the members are so actuated that the tool is introduced in the carcass with the members in a forward position and the elongate edge portions substantially in a vertical position and that the members are swung to each respective side before the tool is retracted from the carcass.

The object is further met by means of a tool for mechanical loosening of at least one organ from the thoracic or abdominal cavity of a carcass, in particular a pig carcass, said tool being characterized in comprising two members pivotally mounted about axes extending in a plane transversely to a shaft portion, on which the tool is mounted, and means for turning the members, said members being each provided with an elongate edge portion extending at a distance from the pivot axis of the member, preferably substantially parallel thereto. Such a tool may be used in the preferred method described above.

The elongate edge portions of the members are preferably designed in such a manner that they correspond to parts of the surface of the thoracic cavity in a carcass behind the lungs.

Preferably, the means for turning the members comprise a pneumatic cylinder. In this manner a resiliency is attained which has the effect that the members may yield from their swung out position, which may be advantageous during the retraction.

In a preferred embodiment the members are each provided with a first edge portion extending from the end of the shaft part along the respective pivot axes of the members and being through a curved edge portion connected with the elongate edge portion, which from the curved edge portion extends in the opposite direction relative to the first edge portion and preferably ends in a joggle. In this manner a balanced load impact of the elongate edge portion is attained relative to the mounting and subsequently a reduced impact. The joggle may serve to breaking heart fat and removing the heart.

In a practical embodiment the two members each comprise a bent piece of metal or bow constituting said edge portions.

A second tool for mechanical loosening of at least one organ from the thoracic or abdominal cavity of a carcass comprises an elongate stick with an inwardly curved recess along the lower end, and means for swinging the stick about a substantially horizontal axis in the direction of the recess by pulling in the opposite end of the stick. This tool is suited for use in the method, whereby the elongate portion, i.e. the oblong stick is turned about the lower end.

The method and the tools according to the invention can be used for loosening of one or more organs, for instance the organs of a heart plucks set. By loosening of these organs, trachea and oesophagus are preferably loosened as well.

By the term substantially vertical position is to be understood a vertical position or a position which may deviate up to 30°, in particular up to 15° from vertical. The same applies to the term "substantially vertically downwards".

The invention will be explained in more detail in the following by means of examples of embodiments with reference to the drawings, in which
Figs 1 and 2 are a vertical sectional view through a pig carcass during two processing steps of an embodiment of the invention,
Fig. 3 is a cross-sectional view of the tool used in Figs 1 and 2,
Figs 4 and 5 show another tool according to the invention seen from two different sides,
Figs 6 and 7 are a horizontal sectional view through a carcass during two processing steps by use of the tool in Figs 4 and 5.

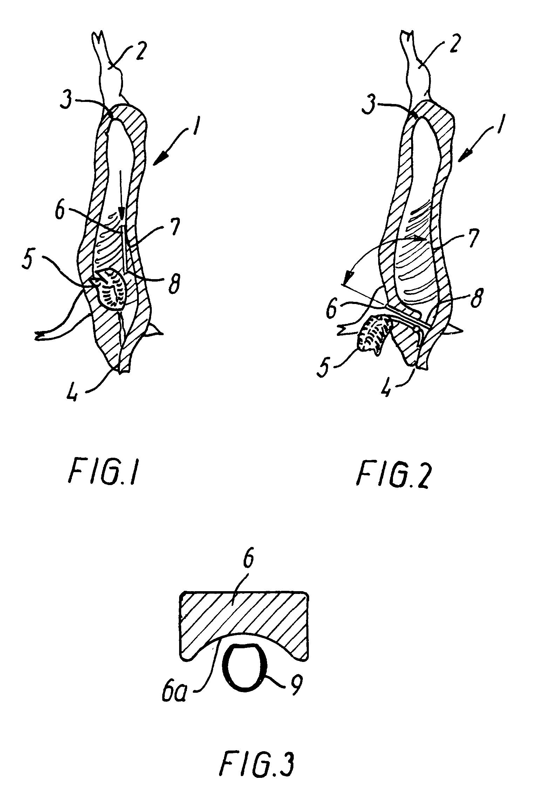

Figs 1 and 2 show a pig carcass 1 as seen in a vertical section when suspended in the hind feet 2 as is the case during a part of the slaughtering/splitting process. The abdomen, the thorax and the neck are cut up by a longitudinal cut extending from anus 3 to the lower jaw 4 with a view to removing the intestines and the plucks set.

In the present case one half of the plucks set, called the liver plucks set and comprising diaphragm, kidney, liver and leaf fat, has already been removed, and the other half 5 of the plucks set remain, the so-called heart plucks set, and comprising heart, lungs and trachea and oesophagus. The tools and processes described here may, however, also be used in carcasses having a complete plucks set or for removal of the intestines and in carcasses, where intestine set and plucks set have not yet been separated.

The lungs may have coalesced with the interior wall of the thoracic cavity, which, if this is the case, makes the removal of the heart plucks set 5 in an automatic process difficult.

Therefore, a tool 6 has been introduced in Fig. 1 in the form of an oblong stick with a cross-section as shown i Fig. 3 to a substantially vertical position near the spinal column 7. The tool 6 is introduced in such a height that the lower end 8 of the tool 6 is positioned above a level corresponding to the position of the apexes of the lungs in the animal before the slaughtering, so that the tool is introduced over the apexes of the lungs in case they may have coalesced.

The tool 6 is then taken downwards in a predetermined distance until the lower end 8 of the tool reaches the neck, following which the upper end of the tool 6 is retracted from the carcass in such a manner that the tool 6 is turned approximately 90° without the lower end 8 of the tool being lifted. Thereby, the heart plucks set 5 is pressed out of the thoracic cavity as shown, any grown in parts of the lungs being torn loose. Then the tool 6 is removed to give room for cutting of the heart plucks set, i.e. cutting of trachea and oesophagus.

Prior to the introduction of the tool 6, the distance between the sliding rail and the forelegs has been determined, and on basis of thereof, the height, in which the tool 6 is to be introduced is determined.

It should be understood that the tool 6 is mounted on a robot arm or another guiding device which is adapted to move the tool as described.

The profile of the tool 6 shown in Fig. 3 with an inwardly curved recess 6a is advantageous, because it has the effect that the tool and the oesophagus 9 are controlled relative to each other. During the insertion and the turning of the stick, it tears the connection from the trachea and the oesophagus to the interior side of the carcass.

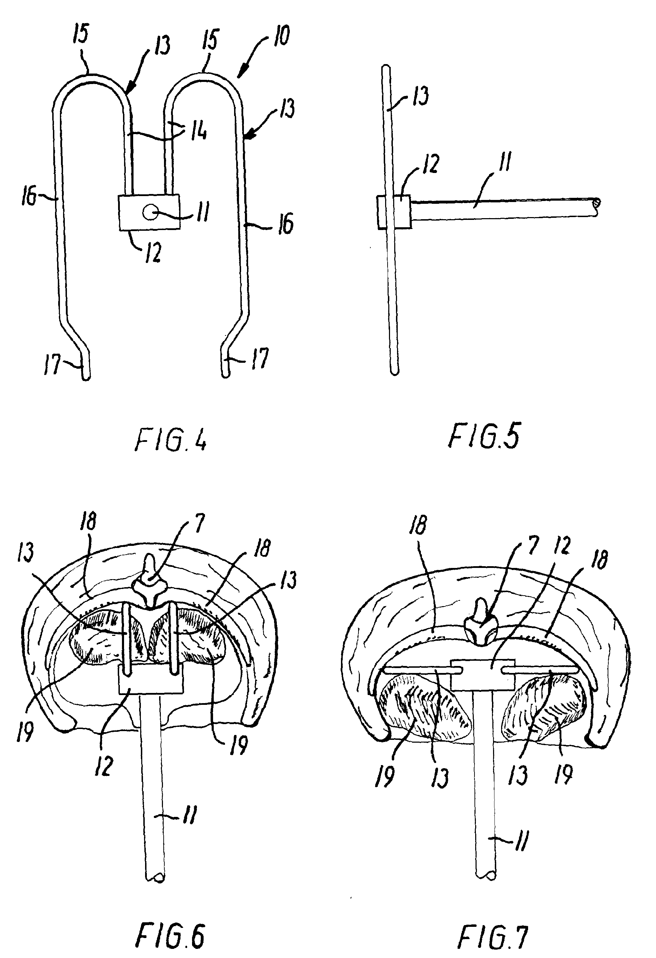

Figs 4-7 show another tool 10 and its use when loosening a heart plucks set. The tool 10 is mounted on a shaft 11 by a bearing block 12 and has two members in the form of bows 13 mounted pivotally about axes extending in a plane transversely to the shaft 11 and going through the bearing block 12. The bows 13 may be turned approximately 90° between the two positions shown in Figs 6 and 7, respectively, by means of a pneumatic cylinder (not shown), which is connected to the bows 13 by means of members likewise not shown.

The pivot axes of the bows 13 extend in the example shown mutually in parallel and perpendicularly but they are skew relative to the centre line of the shaft 11.

The bows 13 have each a first portion 14 which extends from the bearing block 12 along the respective pivot axis. The first portion 14 is through a 180° bending 15 connected with an elongate portion 16 ending in a joggle 17.

By use of the second tool 10, the tool is taken with the bows 13 in the position shown in Fig. 6 into the abdominal cavity of a carcass at such a level that the ends with the joggles 17 are above the position of the lung apexes of the animal when alive. The tool 10 is then introduced till the elongate portions 16 of the bows 13 are positioned close to the spinal column 7, as shown in Fig. 6.

The tool 10 is then taken downwards in a predetermined distance, the elongate portions 16 being taken down in the respective interspaces present between the lungs 19 and the spinal column 7.

When the tool 10 has reached its predetermined lower position, the bows 13 are swung into their unfolded position, whereby the elongate portions 16 scrapes along the ribs 18 over the interior side of the thoracic cavity and loosen any in-grown parts of the lungs 19 from the surface of the thoracic cavity.

Then the tool 10 is retracted substantially horizontally from the thoracic cavity with the bows 13 in the unfolded position, whereby heart fat, if any, is broken and the heart plucks set with the lungs 19 and the heart is removed from the thoracic cavity i.a. by means of the joggles 17. Thereby, the subsequent removal and cutting of the heart plucks set by means of other tools is facilitated.

Due to the fact that a pneumatic cylinder is used for swinging and maintaining the position of the bows 13, they are able to move resiliently, for instance from the position shown in Fig. 7.

It should be understood that the tool 10 by means of the shaft 11 is mounted in an apparatus which can perform said movements up and down, forwards and backwards.

It should further be understood that the tool 10 instead of the bows 13 might be provided with for instance sheet elements with edges corresponding to the design of the bows. The sheet elements might then be shovel-shaped or plane and fill out a greater or smaller part of the area within the edges.

The bows 13 are designed in such a manner that the fits the carcasses, in which they are to be used. The height of the bows 13 may for instance be 30-40 cm and their total width in swung out position may be 22-25 cm. At the lower joggled ends 17, the total width is substantially smaller, for instance approximately 7 cm, to make it possible during use to lead the bows 13 with the ends 17 in the area between the thoracic cavity and the neck portion of the carcass to break heart fat and to remove in particular the heart.

## Claims

1. A method for mechanical loosening of at least one organ from the thoracic or abdominal cavity of a carcass (1) suspended at the hind feet (2) and cut open in the abdomen and the thorax, **characterized in that** a tool (6;10) with at least one elongate portion (6;16) is introduced into the thoracic or abdominal cavity to take up a substantially vertical position at the spinal column (7), the lower end of the tool (8;17) being positioned above a level corresponding to the position of the organ in the animal prior to the slaughtering, that the tool (6;10) is moved substantially vertically downwards until the lower end (8;17) of the tool reaches a second level below the organ or opposite the lower part of the organ and that subsequently at least a part of the elongate portion of the tool is moved away from the spinal column towards the abdominal or thoracic opening, the lower end (8;17) of the tool being kept substantially in the second level.

2. A method according to claim 1, **characterized in that** the elongate portion (6) during the movement away from the spinal column is turned about the lower end (8).

3. A method according to claim 1, **characterized in that** the elongate portion (16) during the movement away from the spinal column is kept substantially in the vertical position.

4. A method according to claim 3, **characterized in that** the tool (10) used is mounted on a shaft part (11) and is provided with two members (13) pivotally mounted about axes extending in a plane transversely to the shaft part (11) and with means for turning the members (13), said members (13) being each provided with an elongate edge portion (16) serving as an elongate portion and extending at a distance from the pivot axis of the member (13), preferably substantially parallel thereto, that the tool (10) is introduced in the carcass with the members (13) in a forward position and the elongate edge portions (16) substantially in a vertical position and that the members (13) are swung to each respective side before the tool (10) is retracted from the carcass.

5. An apparatus for mechanical loosening of at least one organ from the thoracic or abdominal cavity of a carcass (1) suspended at the hind feet (2) and cut open in the abdomen and the thorax, **characterized in** comprising a tool (6;10) with at least one elongate portion (6;16) and devices for moving the tool towards the carcass to a first, substantially vertical position of the elongate portion at the spinal column of the carcass, moving the tool substantially vertically downwards until the lower end of the tool reaches a second, lower level, and subsequently moving at least a part of the elongate portion away from the spinal column, the lower end of the tool being retained substantially in the second level.

6. An apparatus according to claim 5, **characterized in that** the device for pulling or swinging the elongate portion away from the spinal column is designed in such a manner that the elongate portion (6) during the movement away from the spinal column is turned about the lower end (8).

7. An apparatus according to claim 5, **characterized in that** the device for pulling or swinging the elongate portion away from the spinal column is designed in such a manner the elongate portion (16) during the movement away from the spinal column is kept substantially in the vertical position.

8. Apparatus according to claim 7, **characterized in that** the tool (10) is mounted on a shaft part (11) and is provided with two members (13) pivotally mounted about axes extending in a plane transversely to the shaft part (11) and with means for turning the members (13), said members (13) being each provided with an elongate edge portion (16) serving as an elongate portion and extending at a distance from the pivot axis of the member (13), preferably substantially parallel thereto, that the means for turning the members are so acutated that the tool (10) is introduced in the carcass with the members (13) in a forward position and the elongate edge portions (16) substantially in a vertical position and that the members (13) are swung to each respective side before the tool (10) is retracted from the carcass.

9. A tool for mechanical loosening of at least one organ from the thoracic or abdominal cavity of a carcass, **characterized in** comprising two members (13) pivotally mounted about axes extending in a plane transversely to a shaft portion (11), on which the tool is mounted, and means for turning the members (13), said members (13) being each provided with an elongate edge portion (16) serving as an elongate portion and extending at a distance from the pivot axis of the member (13), preferably substantially parallel thereto.

10. A tool according to claim 9, **characterized in that** the elongate edge portions (16) of the members (13) are designed in such a manner that they correspond to parts of the surface of the thoracic cavity in a carcass behind the lungs.

11. A tool according to claim 9 or 10, **characterized in that** the means for turning the members (13) comprise a pneumatic cylinder.

12. A tool according to claims 9-11, **characterized in that** the members (13) are each provided with a first edge portion (14) extending from the end of the shaft part (11) along the respective pivot axes of the members (13) and through a curved edge portion (15) are connected with the elongate edge portion (16), which from the curved edge portion (15) extends in the opposite direction relative to the first edge portion (14) and preferably ends in a joggle (17).

13. A tool according to claim 12, **characterized in that** the two members each comprise a bow (13) constituting said edge portions (14, 15, 16).

14. A tool for mechanical loosening of at least one organ from the thoracic or abdominal cavity of a carcass, **characterized in** comprising an elongate stick (6) with an inwardly curved recess (6a) along the lower end, and means for swinging the stick about a substantially horizontal axis in the direction of the recess by pulling in the opposite end of the stick.
